Europäisches Patentamt

European Patent Office

Office européen des brevets

(11) Veröffentlichungsnummer: **0 443 315 A1**

# EUROPÄISCHE PATENTANMELDUNG

(21) Anmeldenummer: **91100218.6**

(22) Anmeldetag: **09.01.91**

(51) Int. Cl.5: **B07B 1/24**, B02C 13/02

(30) Priorität: **20.02.90 DE 4005331**

(43) Veröffentlichungstag der Anmeldung:
**28.08.91 Patentblatt 91/35**

(84) Benannte Vertragsstaaten:
**AT CH DE DK FR GB IT LI SE**

(71) Anmelder: **Doppstadt, Werner**
**Vossnacker Strasse 67**
**W-5620 Velbert 11 - Langenberg(DE)**

(72) Erfinder: **Doppstadt, Werner**
**Vossnacker Strasse 67**
**W-5620 Velbert 11 - Langenberg(DE)**

(74) Vertreter: **Wolgast, Rudolf, Dipl.-Chem. Dr. et al**
**Dipl.-Phys. Jürgen Weisse Dipl.Chem. Dr. Rudolf Wolgast Bökenbusch 41 Postfach 11 03 86**
**W-5620 Velbert 11 Langenberg(DE)**

(54) **Abfallaufbereitungsanlage.**

(57) Eine Abfallaufbereitungsanlage besteht aus einer Zerkleinerungsvorrichtung (10) zum Zerkleinern von sperrigen Teilen, einer Siebvorrichtung (36) zur Eliminierung von Störgut und einem Fördersystem (90) zur manuellen Sortierung des die Siebvorrichtung (36) verlassenden Materials. Die Baugruppen sind auf je einem transportablen Rahmen (22, 82, 116) montiert. Jede der Baugruppen (10, 36, 90) enthält eine Eingabeöffnung (14, 34, 76). Jede Baugruppe (10, 36), der eine andere Baugruppe (36, 90) nachgeschaltet ist, weist eine Ausgabe-Fördereinrichtung (32, 74) auf. Diese Ausgabe-Fördereinrichtung (32, 74) fördert das austretende Gut in die Eingabeöffnung (34, 76) der nachgeschalteten Baugruppe (36, 90). Das Fördersystem (90) zur manuellen Sortierung ist in einer ebenfalls auf dem Rahmen (116) sitzenden Kabine (114) untergebracht. Dabei sind im Bereich des Fördersystems Abluftabsaugmittel und Frischluftzufuhrmittel (124, 126) vorgesehen.

Fig.1

## Technisches Gebiet

Die Erfindung betrifft eine Abfallaufbereitungsanlage, bestehend aus wenigstens zwei der nachstehenden Baugruppen:

(a) einer Zerkleinerungsvorrichtung zum Zerkleinern von sperrigen Teilen,

(b) einer Siebvorrichtung zur Eliminierung von Störgut und

(c) einem Fördersystem zur manuellen Sortierung des die Siebvorrichtung verlassenden Materials,

## Zugrundeliegender Stand der Technik

Abfall (Müll) wird üblicherweise auf Deponien abgelegt oder in Müllverbrennungsanlagen verbrannt. Beide Verfahren sind mit erheblichen Beeinträchtigungen der Umwelt verbunden. In vielen Fällen ist es sogar erforderlich, im Rahmen der sog. "Altlastsanierung" vorhandene Deponien wieder abzubauen. Bei der Müllverbrennung besteht die Gefahr gesundheitsgefährdender Luftverschmutzung. Die Verbrennungsrückstände müssen wieder auf Deponien abgelegt werden. Deponieraum ist knapp und in vielen Gebieten kaum noch verfügbar, während der Anfall von Müll und Abfall ständig steigt.

Abfall enthält andererseits in der Regel eine Vielzahl wiederverwendbarer Bestandteile wie Metalle, organische Bestandteile, die zu Humus verarbeitet werden können, Kunststoffe, Glas und Papier. Man ist daher bestrebt, solche Bestandteile von vornherein in getrennten Müllbehältern zu sammeln. Das ist aber in der Praxis nur in begrenztem Maße möglich.

Die EP-A-0 212 194 beschreibt ein Kompostiergerät zum Zerkleinern von organischem Abfall, insbesondere von Holz. Das Kompostiergerät enthält einen trogartigen Behälter. Auf dem Boden dieses Behälters ist eine Fördereinrichtung vorgesehen. An einem Ende des trogartigen Behälters befindet sich ein Schlagwerk. Material, das in den Behälter eingegeben wird, wird durch die Fördereinrichtung zu dem Schlagwerk gefördert. Der trogartige Behälter kann auf einen Lastkraftwagen aufgesetzt werden.

Die EP-A-0 273 308 (DE-A-36 44 210; US-A-4852 816) beschreibt ein Kompostiergerät zum Zerkleinern von Holz. Das Kompostiergerät enthält einen Behälter, eine Fördereinrichtung und ein Schlagwerk auf einer Seite. Auf der anderen Seite sitzt eine Antriebskraftmaschine, die über eine Kraftübertragung mit dem Schlagwerk gekuppelt ist. Die Fördereinrichtung liegt in gleicher Höhe wie die Umlaufachse des Schlagwerks. Eine Walze dient zum zusammendrücken und Einziehen des Materials. Räder und Stützen gestatten eine quasistationäre Aufstellung am Einsatzort und geringfügigen Versatz z.B. mittels eines Schaufelladers.

EP-A-0 272 624 (DE-A-36 44 146) beschreibt eine Siebvorrichtung zum Aussieben von Komposterde aus verrottetem, organischen Material. Die Siebvorrichtung enthält einen Einfülltrichter zum Eingeben des Materials. Auf dem Boden des Einfülltrichters läuft ein Förderband. Das Förderband ragt in eine Siebtrommel, die von einem Hydraulikmotor angetrieben wird. Durch eine schraubenförmige Mitnehmerleiste wird das Material durch die Siebtrommel transportiert. Feinkörnige Bestandteile des Materials fallen auf ein unter der Siebtrommel verlaufendes Förderband und werden über querverlaufende Förderbänder zur Seite ausgetragen. Grobe Bestandteile des Materials werden am hinteren Ende des Siebtrommel ausgetragen. Es ist eine Ausblasvorrichtung vorgesehen, durch welche leichte Bestandteile wie Kunststoff aus dem gesiebten Material ausgeblasen und seitlich weggeleitet werden. Am Ausgang der Siebtrommel ist ein Metallabscheider vorgesehen. Die Siebtrommel mit Einfülltrichter und Antrieb ist auf einem fahr- und lenkbaren Chassis angeordnet.

Die Anordnungen nach EP-A-0 212 194 bzw. EP-A-0 273 308 und nach EP-A-0 272 624 können in der Weise zusammenwirken, daß organische Abfälle wie abgeschnittene Äste durch die Kompostiergeräte zerkleinert werden und dann in Mieten verrotten, woraufhin dann der durch die Verrottung gebildete Humus durch die Siebvorrichtung ausgesiebt wird. Diese Vorrichtungen arbeiten somit nicht gleichzeitig im Sinne einer Abfallaufbereitungsanlage zusammen.

Die CH-A-629 975 zeigt einen Hammerbrecher zum Zerkleinern von Altmaterial, vorzugsweise zum Zerkleinern von Metallschrott wie Autokarosserien.

Die FR-A-2 540 330 betrifft eine Vorrichtung zum Zerkleinern von Schüttgut wie Torf, Mergel, Mist und Rinden.

Die DE-A-29 12 218 zeigt eine Zufuhreinrichtung zu Zerkleinerungsmaschinen für leicht zerspanbare Werkstoffe wie Holz mit einem Zufuhrförderer, durch welchen das Material einer Messertrommel zugeführt wird.

Es sind Siebtrommeln zur Reinigung und/oder Klassierung landwirtschaftlicher Produkte bekannt (US-A-4 261 816, US-A-877 462).

Das DE-U-G 86 30 074.1 zeigt eine Kompost-Siebmaschine mit Laufrädern, einem Aufnahmerichter und einem Siebraum. In dem Aufnahmerichter ist ein Kratzförderer angeordnet. Der Siebraum enthält eine Siebschnecke, bei welcher das Siebgut durch eine Siebtrommel transportiert wird. Unterhalb der Siebtrommel ist ein Förderer angeordnet. Dieser Förderer fördert den Siebdurchfall ab. Der Siebrückhalt wird durch die Siebschnecke ausgetragen. Die Anordnung ist auf einem Fahrgestell angeordnet. Auch hier handelt es sich, wie bei der EP-A-0 272 624 um eine Siebvorrichtung für Kompost.

Durch die FR-A-1 300 498 ist eine Siebvorrichtung zur Behandlung von Hausmüll mit einer Siebtrommel bekannt, in welche der Hausmüll über einen Einfülltrichter in die Siebtrommel eingebracht wird. In dieser Siebtrommel werden feine Bestandteile ausgesiebt, so daß die zu fördernde Menge reduziert wird. Bei der Drehung der Trommel, die auch nicht-durchbrochene Abschnitte hat, erfolgt eine Zerkleinerung des Hausmülls, so daß austragseitig wieder ein Teil des Hausmülls durch Sieböffnungen hindurchfällt. Die Vorrichtung sitzt auf einem Chassis mit Rädern.

Die FR-A-2 160 528 betrifft eine Vorrichtung zum Trennen von Kompost und Glasstücken.

Die CH-A-403 683 betrifft ein fahrbares Aggregat zum Aufbereiten von Müll, auf dessen Fahrgestell kontinuierlich arbeitende Transportbänder, eine Siebmaschine, eine Magnetrolle und ein Energieerzeuger mit einer zerreißend und zerkleinernd, ebenfalls kontinuierlich arbeitenden Schlegelmühle vereinigt sind.

Die US-A-4 445 906 beschreibt eine Anlage zur Verarbeitung von Hausmüll zu Briketts.

Keine der beschriebenen Vorrichtungen sieht eine manuelle Trennung verschiedener Bestandteile von Abfall vor.

Durch eine Firmendruckschrift der Torps Elektro- og Maskinvaerksted ApS, Soendervang 3, DK 9640 Farsoe "STÖMAS Stationäre Müllzerkleinerungsmaschine" ist eine Müllzerkleinerungsmaschine mit zwei gegensinnig rotierenden Wellen bekannt, bei welcher auf jeder der Wellen hakenförmige Messer sitzen. Die Wellen werden hydraulisch angetrieben.

Es sind Abfallaufbereitungsanlagen bekannt, bei denen der Abfall zunächst einer Zerkleinerungsvorrichtung zum Zerkleinern von sperrigen Teilen zugeführt wird, dann einer Siebvorrichtung zur Eliminierung von Störgut und schließlich einem Fördersystem zur manuellen Sortierung des die Siebvorrichtung verlassenden Materials. Bekannte Abfallaufbereitungsanlagen dieser Art sind stationäre Anlagen, die in festen Gebäuden untergebracht sind. Solche Anlagen sind wenig flexibel. Ihre Erstellung ist sehr aufwendig.

## Offenbarung der Erfindung

Der Erfindung liegt die Aufgabe zugrunde, eine Abfallaufbereitungsanlage zu schaffen, welche mit relativ geringem Aufwand erstellt werden kann und vielfältig einsetzbar ist, und zwar sowohl räumlich als auch hinsichtlich der Art des aufzubereitenden Abfalls.

Erfindungsgemäß wird diese Aufgabe dadurch gelöst, daß

(d) die Baugruppen auf je einem transportablen Chassis montiert sind,

(e) jede der Baugruppen eine Eingabeöffnung und jede Baugruppe, der eine andere Baugruppe nachgeschaltet ist, eine Ausgabe-Fördereinrichtung aufweist, wobei die Ausgabe-Fördereinrichtung zur Förderung des austretenden Gutes in die Eingabeöffnung der nachgeschalteten Baugruppe eingerichtet ist, und

(f) das Fördersystem zur manuellen Sortierung wenigstens überwiegend in einer ebenfalls auf dem Chassis sitzenden Kabine untergebracht ist.

Eine solche Anlage benötigt keine Gebäude. Die einzelnen Baugruppen können zu dem Bedarfsort gefahren und dort kombiniert werden. Einzelne Baugruppen, beispielsweise die Zerkleinerungsvorrichtung oder die Siebvorrichtung, können auch in anderem Zusammenhang eingesetzt werden, etwa zur Verarbeitung von organischen Abfällen zu Humus nach Art der oben erwähnten EP-A-0 212 194. Es können auch einzelne Baugruppen weggelassen werden, beispielsweise die Zerkleinerungsvorrichtung, wenn eine Zerkleinerung des Abfalls seiner Natur nach nicht erforderlich ist.

Die Sortierer, welche die einzelnen wiederverwertbaren Bestandteile des Abfalls heraussortieren, sind trotz der Mobilität in einer Kabine gegen Witterungseinflüsse geschützt untergebracht. Es hat sich gezeigt, daß die beim Arbeiten mit Abfall, insbesondere mit Müll, in einer relativ kleinen Kabine auftretenden Probleme der Staub- und Geruchsbelästigung der Sortierer durch geeignete technische Maßnahmen lösen lassen.

Eine Anlage der beschriebenen Art kann eingesetzt werden zur Aufbereitung von Hausmüll, zur Aufbereitung von hausmüllähnlichem Gewerbeabfall, zur Aufbereitung von Sperrmüll oder zur Aufbereitung von Baustellenabfällen.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

## Kurze Beschreibung der Zeichnungen

Fig.1    zeigt eine schematische Draufsicht auf eine Abfallaufbereitungsanlage.

Fig.2    ist eine schematische Seitenansicht der Anlage.

Fig.3    zeigt einen Schnitt durch die Kabine mit dem Fördersystem und der Frischluftzuführung und Abluftabsaugung.

Fig.4    zeigt eine Abwandlung der Siebvorrichtung.

Fig.5    zeigt eine zugehörige Draufsicht.

## Bevorzugte Ausführung der Erfindung

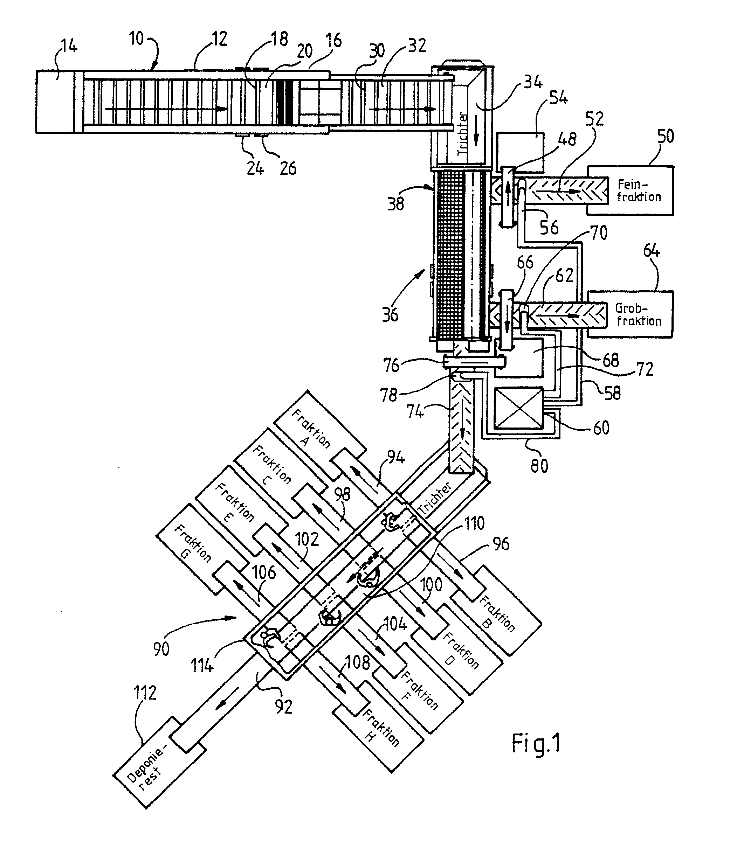

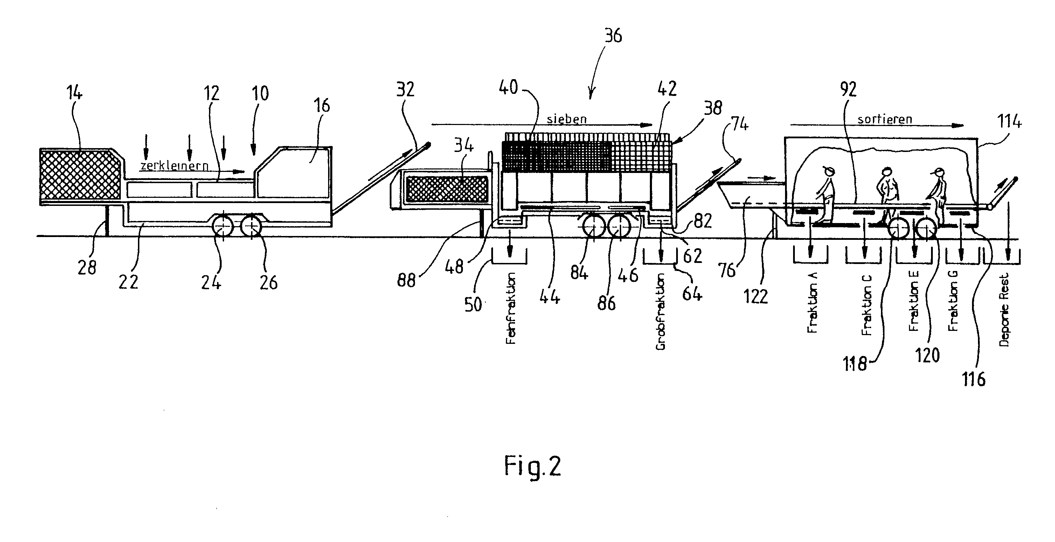

In Fig.1 und 2 ist mit 10 eine Zerkleinerungsvorrichtung bezeichnet. Diese kann nach Art der EP-A-0 273 308 aufgebaut sein. Die Zerkleinerungsvorrichtung 10 weist einen trogartigen Behälter 12 auf. An einem Ende des trogartigen Behälters 12 ist ein Antriebsmotor 14 angeordnet. an dem gegenüberliegenden Ende des Behälters 12 sitzt ein Schlagwerk 16. In dem Behälter 12 läuft ein mit Querleisten 18 versehenes Förderband 20. Die ganze Anordnung ist auf einem Rahmen 22 angeordnet, der als Sattelauflieger ausgebildet und entsprechend transportabel ist. Der Rahmen 22 ist auf zwei Radpaaren 24 und 26 sowie im Betrieb auf einer Stütze 28 abgestützt. Auf der Austragseite ist an dem Rahmen ein mit Querleisten 30 versehenes Förderband 32 gelagert. Das Förderband 32 erstreckt sich von dem Rahmen 22 unterhalb der Austragseite des Schlagwerkes 16 schräg nach oben über einen Einfülltrichter 34 der nächsten Baugruppe.

In der dargestellten Ausführung ist die nächste Baugruppe von einer Siebvorrichtung 36 gebildet. Die Siebvorrichtung kann ähnlich ausgebildet sein wie die Siebvorrichtung nach der EP-A-0 272 624, allerdings mit den nachstehend beschriebenen Abwandlungen.

An den Einfülltrichter 34 schließt sich eine Siebtrommel 38 an. Die Siebtrommel 38 hat zwei Abschnitte, nämlich einen eintragseitigen Abschnitt 40 geringer Maschenweite und einen austragseitigen Abschnitt 42 größerer Maschenweite. Unter den beiden Abschnitten 40 und 42 der Siebtrommel 38 erstrecken sich je ein Förderband 44 bzw.46. Das Förderband 44 fördert die durch den eintragseitigen Abschnitt 40 der Siebtrommel 38 hindurchgefallene Feinfraktion zur Eintragseite hin, also nach links in Fig.2. Das Förderband 46 fördert die durch den austragseitigen Abschnitt 42 der Siebtrommel 38 hindurchgefallene, etwas gröbere Grobfraktion zu der Austragseite hin, also nach rechts in Fig.2.

Am linken Ende in Fig.2 ist unter dem Förderband 44 eine Austragvorrichtung 48 in Form eines weiteren Förderbandes angebracht, welche die Feinfraktion in eine Containermulde 50 fördert. Über der Austragvorrichtung 48 für die Feinfraktion ist ein Metallabscheider 52 angeordnet. Der Metallabscheider 52 erfaßt in der Feinfraktion enthaltene kleine Metallteile und transportiert diese in einen Behälter 54. Weiterhin ist über der Austragvorrichtung 48 eine Absaugeinheit 56 für in der Feinfraktion enthaltene Leichtstoffe wie Papier oder Kunststoff angeordnet. Diese abgesaugten Leichtstoffe werden über eine Saugleitung 58 in einen Leichtstoffbehälter 60 gesaugt.

Am rechten Ende in Fig.2 ist unter dem Förderband 46 eine Austragvorrichtung 62 in Form eines weiteren Förderbandes angebracht, welche die Grobfraktion in eine Containermulde 64 fördert. Über der Austragvorrichtung 62 für die Grobfraktion ist ein Metallabscheider 66 angeordnet. Der Metallabscheider 66 erfaßt in der Grobfraktion enthaltene kleine Metallteile und transportiert diese in einen Behälter 68. Weiterhin ist über der Austragvorrichtung 62 eine Absaugeinheit 70 für in der Grobfraktion enthaltene Leichtstoffe wie Papier oder Kunststoff angeordnet. Diese abgesaugten Leichtstoffe werden über eine Saugleitung 72 ebenfalls in den Leichtstoffbehälter 60 gesaugt.

Auf der Austragseite der Siebtrommel 38 ist ein Förderband 74 angeordnet. Das Förderband 74 erstreckt sich von einer Stelle unterhalb des austragseitigen Endes der Siebtrommel 38 schräg nach oben bis zu einem Einfülltrichter 76 der nächsten Baugruppe. Über dem Förderband 74 ist ebenfalls ein Metallabscheider 76 angeordnet. Der Metallabscheider 76 erfaßt kleinere Metallteile in dem von den Siebmaschen zurückgehaltenen, durch die Siebtrommel hindurchlaufenden Material. Ebenso ist über dem Förderband 74 eine Absaugeinheit 78 angeordnet, durch welche Leichtstoffe abgesaugt werden. Diese Leichtstoffe werden über eine Saugleitung 80 ebenfalls in den Behälter 60 gesaugt.

Die gesamte Siebvorrichtung sitzt auf einem Rahmen 82. Der Rahmen 82 ist als Sattelauflieger ausgebildet. Im Betrieb ist der Rahmen auf zwei Radpaaren 84 und 86 und einer Stütze 88 abgestützt.

Die nachgeschaltete Baugruppe ist ein Fördersystem 90, welches eine manuelle Sortierung des durch die Siebvorrichtung 36 hindurchgelaufenen Materials gestattet. Das Fördersystem 90 enthält eine in Längsrichtung fördernde, das Fördergut zugänglich lassende Fördereinrichtung 92. In dem dargestellten Ausführungsbeispiel ist diese Fördereinrichtung 92 ein Förderband. Unterhalb der Fördereinrichtung 92 sind zu beiden Seiten und im Abstand voneinander Querförderer 94, 96, 98, 100, 102, 104, 106 und 108 angeordnet. Die Querförderer sind paarweise einander gegenüberliegend zu beiden Seiten der Fördereinrichtung 92 angeordnet. Die Querförderer jedes Paares, z.B. 94 und 96, fördern in entgegengesetzten Richtungen. Die Querförderer 94, 98, 102 und 106 fördern nach links oben in Fig.1. Die Querförderer 96, 100, 104 und 108 fördern nach rechts unten in Fig.1. Bei dem dargestellten Ausführungsbeispiel sind die Querförderer ebenfalls von Förderbändern gebildet. Die Querförderer 94 bis 108 sind in seitlichen Abständen voneinander angeordnet. Zwischen den Querförderern sind dann Arbeitsplätze 110 gebildet. An den Arbeitsplätzen sitzen Sortierer. Jedem dieser Sortierer sortiert eine bestimmte Art von wiederverwertbaren Bestandteilen aus dem Abfall heraus und wirft diesen Bestandteil auf den zugehörigen Querförderer. Solche Bestandteile können beispielsweise sein: Holz, Papier, Glas, Kunststoff, Metall, Bauschutt oder Erden bzw. Schlacken. Nicht aussortierter Abfall läuft auf der Fördereinrichtung weiter und fällt in eine Containermulde 112. Das sind unverwertbare Reste, die auf einer Deponie abgelegt werden müssen. Diese Reste bilden nur einen Bruchteil der gesamten Abfallmenge. Es hat sich gezeigt, daß mit der beschriebenen Anlage die auf einer Deponie abzulegende Abfallmenge um wenigstens 50% vermindert werden kann. Der Prozentsatz hängt natürlich von der Natur des Abfalls ab.

Ein Problem bei einer solchen mobilen Anlage sind natürlich die Arbeitsbedingungen der Sortierer. Es ist in der Regel nicht zumutbar, daß die Sortierer den ganzen Tag ungeschützt im Freien arbeiten und dabei Kälte und Hitze, Regen oder Schnee ausgesetzt sind. Die Anlage muß aber unabhängig von Wetter und Jahreszeit arbeiten können. Auch der Abfall fällt wetter- und jahreszeitunabhängig an. Aus diesem Grund ist der die Arbeitsplätze 110 enthaltende Bereich des Fördersystems 90 durch eine Kabine 114 abgedeckt. Die Fördereinrichtung 92 und die Querförderer 94 bis 108 sind durch übliche Gummischürzen abgedichtet in den Innenraum der Kabine 114 hineingeführt. Wie aus Fig.2 ersichtlich ist, sind der Einfülltrichter 76, das Fördersystem 90 und die Kabine 114 auf einem Rahmen 116 angeordnet. Der Rahmen 116 ist wieder als Sattelaufleger ausgebildet und auf zwei Radpaaren 118, 120 und einer Stütze 122 abgestützt. In einer solchen relativ engen Kabine wären die Sortierer jedoch bei den meisten Abfallarten erheblicher Staub und/oder Geruchsbelästigung ausgesetzt. Es sind daher Maßnahmen getroffen, diese Staub und/oder Geruchsbelästigung der Sortierer zu vermeiden oder auf ein zulässiges Maß zu reduzieren. Es hat sich gezeigt, daß dies möglich ist.

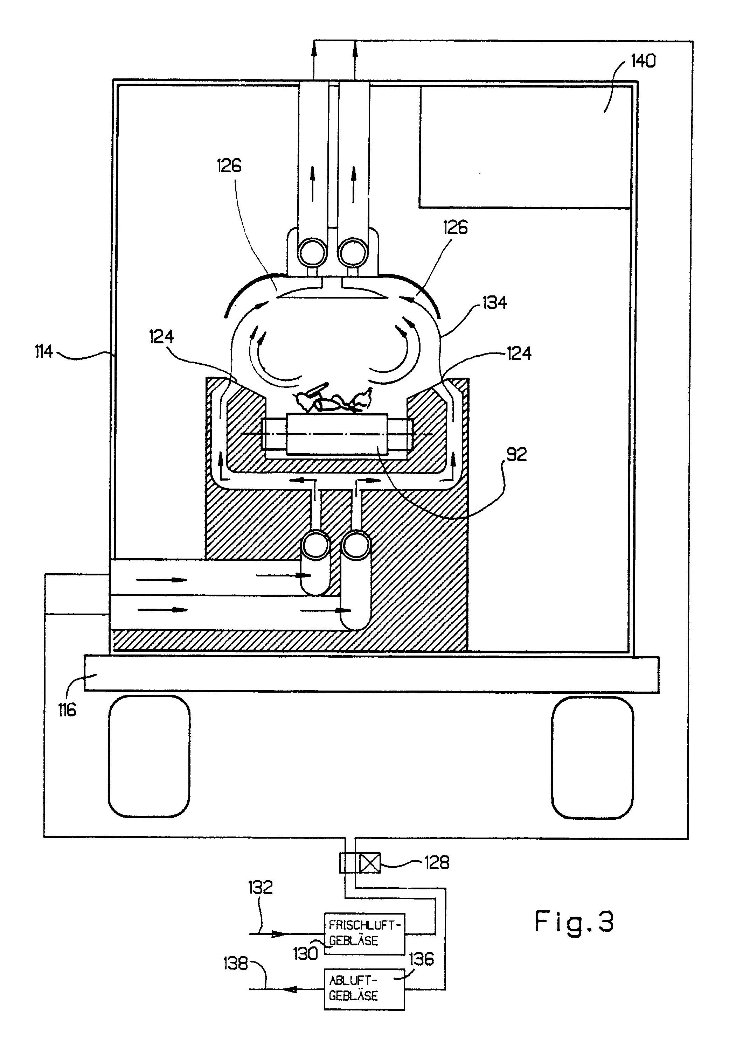

Eine Lösung des Problems der Vermeidung von Staub und Geruchsbelästigung der Sortierer durch den Abfall ist in Fig.3 dargestellt. Fig.3 zeigt schematisch einen Schnitt durch die Kabine 114 mit der Fördereinrichtung 92. Längs der Fördereinrichtung 92 und unterhalb derselben sind Luftöffnungen 124 vorgesehen. Weiterhin sind längs der Fördereinrichtung 92 und oberhalb derselben Luftöffnungen 126 vorgesehen. Die oberen Luftöffnungen 126 liegen den unteren Luftöffnungen im wesentlichen gegenüber. Bei der dargestellten Betriebsweise sind die unteren Luftöffnungen 124 über ein 2/4-Wegeventil 128 mit einem Frischluftgebläse 130 verbunden. Das Frischluftgebläse saugt Frischluft aus einem Frischlufteinlaß 132 an und bläst diese Frischluft als Frischluftstrahlen 134 im wesentlichen vertikal durch die unteren Luftöffnungen 124. Die oberen Luftöffnungen 126 sind mit einem Abluftgebläse 136 verbunden. Das Abluftgebläse 136 saugt über das 2/4-Wegeventil 128 Abluft aus dem Innenraum der Kabine 114 ab und drückt diese über einen Abluftauslaß 138 ins Freie. Es entsteht somit zwischen der Fördereinrichtung 92 und den Sortierern ein Luftvorhang der die Verteilung von Staub und Gestank im Innenraum der Kabine 114 verhindert und der den Staub und übelriechende Gase von dem Abfall zu den oberen Luftöffnungen 126 leitet. Da die angesaugte, u.U. übermäßig kalte oder warme Frischluft im wesentlichen sofort über die gegenüberliegenden Luftöffnungen wieder abgesaugt wird, beeinflußt sie die Raumtemperatur in der Kabine 114 nur unwesentlich.

Die dargestellte Betriebsweise entspricht dem Fall, daß die Außentemperatur höher ist als die Raumtemperatur. In diesem Fall seigt die relativ warme Frischluft durch thermischen Auftrieb auf zu den oberen Luftöffnungen 126, was die Ausbildung eines Luftvorhanges begünstigt. Ist die Außentemperatur geringer als die Raumtemperatur, dann wird das 2/4-Wegeventil 128 umgeschaltet: Die Frischluft wird dann über die oberen Luftöffnungen 126 zugeführt. Die Abluft wird über die unteren Luftöffnungen 124 abgesaugt. Die Ausbildung eines Luftvorhanges wird dadurch begünstigt, daß die relativ kalte Frischluft nach unten sinkt.

Die Kabine 114 ist weiterhin mit einer Klimaanlage 140 versehen, welche unabhängig von der Außentemperatur eine gewünschte Temperatur in der Kabine 114 aufrechterhält.

Eine Müllzerkleinerungsmaschine mit gegenläufig rotierenden Messern, wie sie beispielsweise in der oben genannten Firmendruckschrift "STÖMAS" dargestellt ist, kann der Zerkleinerungsmaschine 10 vorgeschaltet werden oder statt der Zerkleinerungsmaschine 10 unmittelbar mit der Siebvorrichtung 36 verwendet werden. Im letzteren Fall wird die Müllzerkleinerungsmaschine in den Einfülltrichter 34 der Siebvorrichtung 36 eingesetzt.

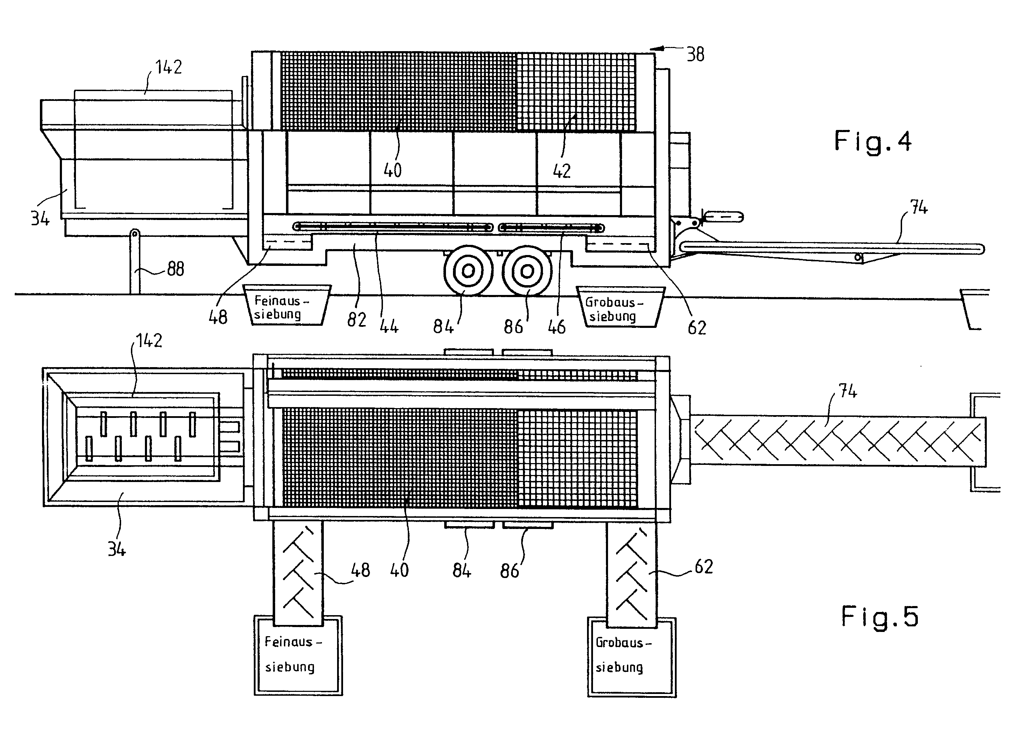

In Fig.4 und Fig.5 ist die Siebvorrichtung 36 in Verbindung mit einer solchen wahlweise einsetzbaren Müllzerkleinerungsmaschine 142 dargestellt.

**Patentansprüche**

1. Abfallaufbereitungsanlage, bestehend aus wenigstens zwei der nachstehenden Baugruppen:
   (a) einer Zerkleinerungsvorrichtung (10) zum Zerkleinern von sperrigen Teilen,
   (b) einer Siebvorrichtung (36) zur Eliminierung von Störgut und
   (c) einem Fördersystem (90) zur manuellen Sortierung des die Siebvorrichtung (36) verlassenden Materials,
   **dadurch gekennzeichnet, daß**

(d) die Baugruppen auf je einem transportablen Rahmen (22,82,116) montiert sind,

(e) jede der Baugruppen (10,36,90) eine Eingabeöffnung (14,34,76) und jede Baugruppe (10,36), der eine andere Baugruppe (36,90) nachgeschaltet ist, eine Ausgabe-Fördereinrichtung (32,74) aufweist, wobei die Ausgabe-Fördereinrichtung (32,74) zur Förderung des austretenden Gutes in die Eingabeöffnung (34,76) der nachgeschalteten Baugruppe (36,90) eingerichtet ist, und

(f) das Fördersystem (90) zur manuellen Sortierung wenigstens überwiegend in einer ebenfalls auf dem Rahmen (116) sitzenden Kabine (114) untergebracht ist.

2. Abfallaufbereitungsanlage nach Anspruch 1, **dadurch gekennzeichnet, daß** die Baugruppen (10,36,90) als Sattelauflieger ausgebildet sind.

3. Abfallaufbereitungsanlage nach Anspruch 1 oder 2, **dadurch gekennzeichnet, daß** die Siebvorrichtung (36) von einer Siebtrommel (38) mit Mitteln zum axialen Fördern des Siebgutes durch die Siebtrommel (38) gebildet ist.

4. Abfallaufbereitungsanlage nach Anspruch 3, **dadurch gekennzeichnet, daß**

(a) unter der Siebtrommel (38) ein in Axialrichtung laufendes Förderband (44,46) angeordnet ist und

(b) unter dem austragseitigen Ende des Förderbandes (44,46) eine Austragvorrichtung (48,62) zum seitlichen Austragen des geförderten Siebgutes angeordnet ist.

5. Abfallaufbereitungsanlage nach Anspruch 4, **dadurch gekennzeichnet, daß**

(a) die Siebtrommel (38) wenigstens zwei Bereiche (40,42) unterschiedlicher Maschenweite aufweist, wobei die Maschenweite von der Eintragseite zur Austragseite hin zunimmt, und

(b) unter jedem der Bereiche (40,42) ein in Axialrichtung förderndes Förderband (44,46) mit einer austragseitig unter diesem angeordneten Austragvorrichtung (48,52) angeordnet ist.

6. Abfallaufbereitungsanlage nach Anspruch 4 oder 5, **dadurch gekennzeichnet, daß** an der Austragvorrichtung (48,62) ein Metallabscheider (52,66) vorgesehen ist.

7. Abfallaufbereitungsanlage nach Anspruch 4 oder 5, **dadurch gekennzeichnet, daß** an der Austragvorrichtung (48,62) eine Absaugvorrichtung (56,70) zum Absaugen von Leichtstoffen wie Papier oder Kunststoff vorgesehen ist.

8. Abfallaufbereitungsanlage nach einem der Ansprüche 1 bis 7, **dadurch gekennzeichnet, daß** das Fördersystem (90) zur manuellen Sortierung des Materials

(a) eine in einer Längsrichtung fördernde, das Fördergut zugänglich lassende Fördereinrichtung (92) enthält sowie

(b) Austragvorrichtungen (94 bis 108), die seitlich von der Fördereinrichtung (92) im Abstand voneinander angeordnet sind, zum Abtransport aussortierter Fraktionen des Fördergutes,

(c) wobei zwischen den Austragvorrichtungen Arbeitsplätze (110) zum manuellen Aussortieren von Materialien gebildet sind.

9. Abfallaufbereitungsanlage nach Anspruch 8, **dadurch gekennzeichnet, daß** die Austrageinrichtungen (94 bis 108) Querförderer sind.

10. Abfallaufbereitungsanlage nach einem der Ansprüche 1 bis 9, **dadurch gekennzeichnet, daß** im Bereich des Fördersystems Abluftabsaugmittel und Frischluftzufuhrmittel (124,126) vorgesehen sind.

11. Abfallaufbereitungsanlage nach Anspruch 10, **dadurch gekennzeichnet, daß** längs wenigstens eines Teils des Fördersystems ein Satz von unteren Luftöffnungen (124) und ein weiterer Satz von Luftöffnungen (126) oberhalb des Fördersystems angeordnet ist, wobei durch einen Satz von Luftöffnungen die Abluft abgesaugt wird und durch einen anderen Satz von Luftöffnungen die Frischluft zugeführt wird.

12. Abfallaufbereitungsanlage nach Anspruch 11, **dadurch gekennzeichnet, daß** die Abluftabsaugung und die Frischluftzufuhr zwischen den Sätzen der Luftöffnungen (124,126) umschaltbar sind, derart, daß daß bei niedriger Außentemperatur die Frischluft durch die oberhalb des Fördersystems (90) angeordneten Luftöffnungen (126) zugeführt und die Abluft durch die unteren Luftöffnungen (124) abgeführt wird, während bei hohen Außentemperaturen die Frischluft durch die unteren Luftöffnungen (124) zugeführt und durch die oberhalb des Fördersystems (90) angeordneten Luftöffnungen abgeführt wird.

13. Abfallaufbereitungsanlage nach einem der Ansprüche 1 bis 12 **dadurch gekennzeichnet, daß** die Kabine (114) klimatisiert ist.

14. Abfallaufbereitungsanlage nach einem der Ansprüche 3 bis 7, **dadurch gekennzeichnet, daß** die Eingabeöffnung der Siebvorrichtung (36) von einem Einfülltrichter (34) gebildet ist, in welchen wahlweise eine mit gegensinnig umlaufenden Messern arbeitende Müllzerkleinerungsmaschine (142) einsetzbar ist.

Fig.1

zerkleinern

sieben

sortieren

Feinfraktion

Grobfraktion

Fraktion A

Fraktion C

Fraktion E

Fraktion G

Deponie Rest

EP 0 443 315 A1

Fig.2

Fig.3

FRISCHLUFT-
GEBLÄSE

ABLUFT-
GEBLÄSE

Fig.4

Fig.5

EP 0 443 315 A1

| | EINSCHLÄGIGE DOKUMENTE | | EP 91100218.6 |
|---|---|---|---|
| Kategorie | Kennzeichnung des Dokuments mit Angabe. soweit erforderlich. der maßgeblichen Teile | Betrifft Anspruch | KLASSIFIKATION DER ANMELDUNG (Int Cl.⁵) |
| A | DE - A1 - 3 149 784 (KATUSCHINSKI) * Anspruch 1; Fig. 1 * | 1-5 | B 07 B 1/24 B 02 C 13/02 |
| A | GB - A - 2 122 111 (J.M. VOITH GMBH) * Zusammenfassung; Fig. * | 1-5 | |
| D,A | EP - A1 - 0 212 194 (DOPPSTADT) * Ansprüche 1,2; Fig. 2 * | 1-6,8 | |
| D,A | DE - A1 - 2 912 218 (HANS JENZ MASCHINEN U. FAHRZEUGBAU) * Ansprüche 1,21; Fig. 1,4 * | 1-6 | |
| D,A | EP - A2/A3 - 0 273 308 (DOPPSTADT) * Zusammenfassung * | 1-5 | RECHERCHIERTE SACHGEBIETE (Int Cl.⁵) |
| D,A | CH - A5 - 629 975 (LINDEMANN MASCHINENFABRIK GMBH) * Anspruch 1 * ---- | 1-5 | B 07 B 1/00 B 02 C 13/00 |

Der vorliegende Recherchenbericht wurde für alle Patentansprüche erstellt.

| Recherchenort WIEN | Abschlußdatum der Recherche 30-04-1991 | Prüfer BRUS |
|---|---|---|